(19) Europäisches Patentamt
European Patent Office
Office européen des brevets

(11) **EP 3 570 063 B1**

(12) **EUROPÄISCHE PATENTSCHRIFT**

(45) Veröffentlichungstag und Bekanntmachung des Hinweises auf die Patenterteilung:
**30.08.2023 Patentblatt 2023/35**

(21) Anmeldenummer: **18172050.9**

(22) Anmeldetag: **14.05.2018**

(51) Internationale Patentklassifikation (IPC):
**G06V 20/56** *(2022.01)*

(52) Gemeinsame Patentklassifikation (CPC):
**G06V 20/56; G06V 20/58;** G01S 7/403;
G01S 7/4086

(54) **VERFAHREN ZUR SCHNELLEN ABSCHÄTZUNG EINER PERSPEKTIVISCHEN VERDECKUNG IN EINER SIMULATION EINES BILDGEBENDEN SENSORS**

METHOD FOR QUICK ESTIMATION OF A PERSPECTIVE CONCEALMENT IN A SIMULATION OF AN IMAGING SENSOR

PROCÉDÉ D'ÉVALUATION RAPIDE D'UN MASQUAGE DANS LA PERSPECTIVE DANS UNE SIMULATION D'UN CAPTEUR GÉNÉRATEUR D'IMAGES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**20.11.2019 Patentblatt 2019/47**

(73) Patentinhaber: **dSPACE GmbH**
**33102 Paderborn (DE)**

(72) Erfinder:
• **Liem, Kusnadi**
**33102 Paderborn (DE)**
• **Peperhowe, Michael**
**59602 Rüthen (DE)**

(56) Entgegenhaltungen:
GB-A- 2 451 615    US-A1- 2017 363 719
US-B1- 9 575 161

• SHEN XUE-LI ET AL: "Fast collision detection based on projection parallel algorithm", FUTURE COMPUTER AND COMMUNICATION (ICFCC), 2010 2ND INTERNATIONAL CONFERENCE ON, IEEE, PISCATAWAY, NJ, USA, 21. Mai 2010 (2010-05-21), Seiten V1-179, XP031699206, ISBN: 978-1-4244-5821-9

**Beschreibung**

Die Erfindung betrifft Sensorsimulation und virtuelles Testen.

In der Entwicklung sicherheitskritischer eingebetteter Systeme ist es bekannt, diese Systeme in einer virtuellen Testumgebung auf korrekte Funktion zu überprüfen. In einem als Hardware in the Loop (HIL) bekannten Verfahren ist ein Prototyp eines eingebetteten Systems mit einem Simulationsrechner verbunden, der eine größtenteils virtuelle Testumgebung bereitstellt und das eingebettete Systems in harter Echtzeit mit mittels der virtuellen Testumgebung erzeugten Eingangsdaten versorgt. Umgekehrt kann der Simulationsrechner Steuersignale des eingebetteten Systems auslesen und diese bei der Berechnung des Zustands der virtuellen Testumgebung im jeweils nächsten Simulationszeitschritt berücksichtigen. In früheren Entwicklungsstadien ist es auch bekannt, statt eines prototypischen eingebetteten Systems nur dessen Software oder deren Programmlogik in eine virtuelle Testumgebung einzubinden. Solche vollständig virtuellen Testverfahren sind als Software in the Loop (SIL) oder Model in the Loop (MIL) bekannt und müssen nicht zwangsläufig in Echtzeit ablaufen. In der Automobilindustrie ist weiterhin ein Vehicle in the Loop (VIL) genanntes Verfahren bekannt, bei dem ein Prototyp des eingebetteten Systems in einem physischen Testfahrzeug verbaut auf einer Teststrecke oder einem Rollenprüfstand getestet wird, wobei das eingebettete System in harter Echtzeit mit mittels einer virtuellen Testumgebung erzeugten synthetischen Sensordaten versorgt wird.

Einige eingebettete Systeme werten Sensordaten aus, die von Sensorsystemen mit bildgebenden Sensoren zugeliefert werden. Besondere Bedeutung haben derartige eingebettete Systeme in der Automobilindustrie im Zusammenhang fortgeschrittener Fahrassistenzsysteme (ADAS, *Advanced Driving Assistance Systems)* und des hochautomatisierten Fahrens (HAF). Unter bildgebenden Sensoren werden alle Sensoren verstanden, aus deren Sensordaten ein Bild der Umgebung des Sensors reproduzierbar ist, insbesondere RADAR-, LIDAR- und Ultraschallsensoren und weiterhin die optischen Sensoren von Kamerasystemen zur passiven Bilderfassung im sichtbaren oder nicht sichtbaren Lichtspektrum. Derartige Sensorsysteme können neben dem Sensor selbst auch eine Bildverarbeitungseinheit zur Auswertung der von dem Sensor zugelieferten Bilddaten umfassen. Die Bildverarbeitungseinheit kann als autonomes eingebettetes System ausgestaltet sein oder in das zu prüfende eingebettete System integriert sein.

Wenn eine virtuelle Testumgebung für die Prüfung eines eingebetteten Systems vorgesehen ist, das Eingangsdaten von einem Sensorsystem mit einem bildgebenden Sensor erwartet, muss die virtuelle Testumgebung eine Simulation des Sensorsystems umfassen. In einigen Anwendungsfällen, beispielsweise wenn die Bildverarbeitungseinheit kein Prüfling bzw. kein Teil des Prüflings ist, ist es zur Einsparung von Rechenaufwand sinnvoll, auf eine detaillierte Simulation des Sensors zu verzichten. Statt aus der virtuellen Testumgebung Bilddaten des Sensors zu berechnen, wird dem simulierten Sensor ein Sensorsichtfeld zugeordnet, beispielsweise ein vom Sensor ausgehendes kegelförmiges Sichtfeld mit begrenzter Reichweite, und aus einer Vielzahl von der virtuellen Testumgebung umfasster virtueller Objekte wird eine Anzahl virtueller Objekte als durch das Sensorsystem erkennbare virtuelle Objekte bestimmt. Wenn die Sensorsimulation beispielsweise für die Simulation einer Verkehrsschilderkennung vorgesehen ist, können alle der virtuellen Testumgebung zufügbaren virtuellen Verkehrsschilder als durch das Sensorsystem erkennbare virtuelle Objekte bestimmt werden. In einem Simulationslauf in der virtuellen Testumgebung würden dann in einer beispielhaften Anwendung alle virtuellen Verkehrsschilder, die von dem Sensorsichtfeld erfasst sind, in eine vorläufige Liste erkannter virtueller Objekte aufgenommen werden, während alle übrigen von dem Sensorsichtfeld erfassten virtuellen Objekte, beispielsweise Personen, Bäume, Gebäude, Fahrzeuge und Ampeln, von dem simulierten Sensorsystem grundsätzlich nicht erkannt werden, d.h. grundsätzlich nicht in die vorläufige Liste erkannter virtueller Objekte aufgenommen werden.

In der vorliegenden Beschreibung der Erfindung ist demnach mit einer Simulation eines Sensorsystems bevorzugt eine Simulation anhand eines einfachen Sensorsystemmodells gemeint, das lediglich das Verhalten des Sensorsystems oberflächlich imitiert, aber allenfalls in geringem Umfang physikalische oder technische Abläufe eines physischen Sensorsystems simuliert und insbesondere keine Berechnung synthetischer Bilddaten, die beispielsweise die von einem echten bildgebenden Sensor erzeugten Bilddaten nachbilden, umfasst. Derartige einfache Sensorsystemmodelle sind auch als Ground-Truth-Sensoren bekannt. Ein Vorteil dieser ist der geringe Rechenaufwand, der zu ihrer Ausführung nötig ist. Dadurch eignen sich Ground-Truth-Sensoren besonders zur Anwendung auf virtuelle Tests, die in harter Echtzeit durchgeführt werden, beispielsweise auf Hardware-in-the-Loop-Verfahren.

Ein grundsätzliches Problem bei der Implementierung von Ground-Truth-Sensoren ist die Berücksichtigung einer perspektivischen Verdeckung von durch das Sensorsystem erkennbaren virtuellen Objekten. Wie vorhergehend beschrieben bewertet ein Ground-Truth-Sensor zunächst alle virtuellen Objekte als erkannt, die von dem Sensorsichtfeld erfasst und als durch das Sensorsystem erkennbare Objekte bestimmt sind. Um das Sensorsystem realistisch zu simulieren, muss aber nachträglich geprüft werden, ob ein als erkannt gewertetes virtuelles Objekt für den Sensor tatsächlich sichtbar ist oder ob das virtuelle Objekt aus Sicht des Sensors zumindest teilweise durch ein anderes virtuelles Objekt verdeckt ist. Wenn das der Fall ist und die perspektivische Verdeckung ein gewisses Maß überschreitet, muss das virtuelle Objekt aus der vorläufigen Liste erkannter virtueller Objekte entfernt werden.

Aus dem Fachgebiet der Computergraphik sind zahlreiche Verfahren zur Erkennung perspektivisch verdeckter Flächen bekannt. Eine Auswahl ist beispielsweise in der Präsentation "Visibility and Hidden Surface Removal" von Torsten Möller offenbart (Teil der Vorlesung "CMPT 361: Introduction to Computer Graphics" der Simon Fraser University, Kanada, abrufbar im Internet). Einige davon beinhalten auch die Projektion einer dreidimensionalen Szene auf eine Projektionsebene. Ziel dieser bekannten Verfahren ist aber die Berechnung eines realistischen Bildes, und ihr hoher Rechenaufwand macht sie für Echtzeitanwendungen problematisch, zumal nach der Berechnung eines Sensorbildes gemäß einem der bekannten Verfahren noch evaluiert werden müsste, ob eine ermittelte perspektivische Verdeckung noch eine Erkennung des verdeckten Objekts durch das simulierte Sensorsystem zulassen würde.

Der Artikel "Fast Collision Detection Based on Projection Parallel Algorithm" von Xue-li Shen und Tao Li (2nd International Conference on Future Computer und Communication, IEEE, 2010) beschreibt ein Verfahren zur Kollisionserkennung zweier Körper in einem dreidimensionalen Raum durch Projektion auf drei orthogonale Projektionsebenen und Durchführung einer Kollisionserkennung auf jeder Projektionsebene.

Die EP 0 620 409 B1 offenbart eine Simulationsumgebung für die Entwicklung und den Test zielsuchender Raketen. Die Simulationsumgebung berechnet in harter Echtzeit ein synthetisches Bild für die bildgebenden Sensoren einer Rakete, und die Offenbarung umfasst ein Verfahren zur Erkennung perspektivisch verdeckter Flächen.

Die US 2017/0363719 A1 und die US 9575161 B1 offenbaren jeweils eine Prüfvorrichtung zur Simulation von Radarechos der von einem automativen Assistenzsystem ausgesandten Radarpulse.

Vor diesem Hintergrund ist die Aufgabe der Erfindung, die Erkennung einer perspektivischen Verdeckung in einer Simulation eines Sensorsystems mit einem bildgebenden Sensor in einer virtuellen Testumgebung zu beschleunigen.

Zur Lösung der Aufgabe wird ein nachfolgend beschriebenes Verfahren zur Simulation eines Sensorsystems nach Anspruch 1 vorgeschlagen. Das simulierte Sensorsystem umfasst dabei einen bildgebenden Sensor und eine Bildverarbeitungseinheit zur Erkennung von Objekten in dem von dem Sensor ausgegebenen Sensorbild. Die Simulation des Sensorsystems selbst ist bevorzugt ein Ground-Truth-Sensor und umfasst den bildgebenden Sensor und die Bildverarbeitungseinheit nur implizit.

Zur Anwendung des Verfahrens wird eine virtuelle Testumgebung eingesetzt, die eine Vielzahl virtueller Objekte umfasst und in der dem Sensor und jedem virtuellen Objekt jeweils Ortskoordinaten zugeordnet werden. Dem Sensor wird in der virtuellen Testumgebung ein Sensorsichtfeld zugeordnet, und eine Anzahl von Objekten aus der Vielzahl virtueller Objekte wird als durch das Sensorsystem erkennbare virtuelle Objekte bestimmt.

Auf der virtuellen Testumgebung wird ein Simulationslauf gestartet, in dessen Verlauf dem Sensor oder mindestens einem virtuellen Objekt zyklisch neue Ortskoordinaten in der virtuellen Testumgebung zugeordnet werden, und es wird zyklisch überprüft, ob zumindest ein virtuelles Objekt durch das Sensorsichtfeld erfasst ist.

Wenn zumindest ein erstes virtuelles Objekt und ein zweites virtuelles Objekt durch das Sensorsichtfeld erfasst sind und das zweite virtuelle Objekt durch das Sensorsystem erkennbar ist, wird auf die nachfolgend beschriebene Weise eine Abschätzung der perspektivischen Verdeckung des zweiten Objekts durch das erste Objekt durchgeführt. Dazu wird in der virtuellen Testumgebung zunächst eine Projektionsebene aufgespannt, deren räumliche Orientierung so gewählt ist, dass sie für eine Zentralprojektion des ersten Objekts und des zweiten Objekts geeignet ist, wenn die Ortskoordinaten des Sensors als Augpunkt der Zentralprojektion verwendet werden. Eine Zentralprojektion ist als Projektion mit vom Augpunkt ausgehendem fächerförmigem Strahlengang zu verstehen, die auf der Projektionsebene ein Bild der projizierten Punkte erzeugt, wie sie ein am Augpunkt stehender Beobachter, konkret der Sensor, wahrnehmen würde.

Auf die Projektionsebene wird eine zumindest teilweise Zentralprojektion eines mit dem ersten Objekt ortsgleichen geometrischen Körpers mit den Ortskoordinaten des Sensors als Augpunkt durchgeführt, wobei die Abmessungen des unskalierten ersten geometrischen Körpers vollständig oder zumindest näherungsweise mit den Abmessungen des ersten Objekts übereinstimmen. Es ist unerheblich, ob der erste geometrische Körper in der virtuellen Testumgebung nativ vorhanden ist oder zur Durchführung der Zentralprojektion nach Bedarf erzeugt wird. Bei vollständiger Übereinstimmung der Abmessungen des ersten geometrischen Körpers und des ersten Objekts kann der erste geometrische Körper auch mit dem ersten Objekt identisch sein, also nur implizit in der virtuellen Testumgebung vorhanden sein. Bevorzugt ist der erste geometrische Körper ein Hüllkörper oder ein skalierter Hüllkörper des ersten Objekts. Unter einem Hüllkörper eines Objekts ist ein das Objekt vollständig umfassender geometrischer Körper mit gegenüber dem umfassten Objekt vereinfachter Geometrie zu verstehen, insbesondere ein Polyeder mit wenigen Vertices oder ein auf einfache Weise analytisch beschreibbarer Körper, beispielsweise eine Kugel oder ein Zylinder.

Wie viele Vertices ein Hüllkörper höchstens umfassen sollte bzw. wie einfach dessen Geometrie sein sollte, ist vom Anwendungsfall abhängig und kaum allgemeingültig festlegbar. Sofern das Verfahren zur Ausführung in Echtzeit vorgesehen ist, sollte die Geometrie der geometrischen Körper grundsätzlich derart gewählt sein, dass ein vollständiger Durchlauf einer Softwareimplementierung des Verfahrens innerhalb einer durch den Anwendungsfall vorgegebenen Zeitspanne, insbesondere innerhalb eines Simulationszeitschritts, so sicher gewährleistet ist, dass innerhalb eines vollständigen Simulationslaufs keine Übertretung der vorgegebenen Zeitspanne durch die Softwareimplementierung zu erwarten ist. Welche Geometrien der geometrischen Körper bzw. welche Anzahl von Vertices vertretbar sind, ist insbesondere von der Implementierung des Verfahrens, der Komplexität der virtuellen Testumgebung und der Simulation und von der Hardwareausstattung des das Verfahren durchführenden Computersystems abhängig.

Unter einer teilweisen Zentralprojektion bzw. einer teilweise durchgeführten Zentralprojektion eines Objekts ist zu verstehen, dass nur eine unvollständige Auswahl von Punkten des Objekts in einer Zentralprojektion auf die Projektionsebene projiziert wird. In einigen Ausführungsformen wird aus den projizierten Punkten eine Menge auf der Projektionsebene gebildet, die näherungsweise mit einem aus einer vollständig durchgeführten Zentralprojektion des Objekts resultierenden Abbild übereinstimmt.

Auf zur Durchführung der Zentralprojektion des ersten geometrischen Körpers analoge Weise wird eine zumindest teilweise Zentralprojektion eines mit dem zweiten Objekt ortsgleichen zweiten geometrischen Körpers auf die Projektionsebene mit den Ortskoordinaten des Sensors als Augpunkt durchgeführt, wobei die Abmessungen des unskalierten zweiten geometrischen Körpers vollständig oder zumindest näherungsweise mit den Abmessungen des zweiten Objekts übereinstimmen.

Die Projektion des ersten geometrischen Körpers erzeugt ein erstes Abbild auf der Projektionsebene, die Projektion des zweiten geometrischen Körpers erzeugt ein zweites Abbild auf der Projektionsebene. Nachfolgend wird geprüft, ob eine Schnittmenge des ersten Abbilds und des zweiten Abbilds existiert. In dem Fall, dass erstens eine Schnittmenge existiert und zweitens der euklidische Abstand zwischen Sensor und erstem Objekt geringer als der euklidische Abstand zwischen Sensor und zweitem Objekt ist, wird das zweite Objekt als geometrisch verdeckt gewertet, d.h. es wird davon ausgegangen, dass die Bildverarbeitungseinheit das zweite Objekt nicht erkennt, auch dann nicht, wenn das zweite Objekt aus Sicht des Sensors teilweise sichtbar ist, weil der Grad der perspektivischen Verdeckung für eine Erkennung des zweiten Objekts durch die Bildverarbeitungseinheit zu hoch ist. Eine Ermittlung der euklidischen Abstände erfolgt bevorzugt anhand der Ortskoordinaten des Sensors, des ersten Objekts und des zweiten Objekts.

Ein euklidischer Abstand zwischen dem Sensor und einem Objekt kann anhand der Ortskoordinaten des Sensors und eines festgelegten Punktes des Objekts ermittelt werden, beispielsweise anhand des dem Sensor nächstliegenden Punktes des Objekts oder der Ortskoordinaten des Objekts.

In dem Fall, dass mindestens eine der vorgenannten Bedingungen nicht erfüllt ist, dass also entweder keine Schnittmenge existiert oder der euklidische Abstand zwischen Sensor und erstem Objekt größer oder gleich dem euklidischen Abstand zwischen Sensor und zweitem Objekt ist, wird das zweite Objekt als perspektivisch nicht verdeckt gewertet, d.h. es wird davon ausgegangen, dass die Bildverarbeitungseinheit das zweite Objekt erkennt, auch dann, wenn das zweite Objekt teilweise durch das erste Objekt perspektivisch verdeckt ist, weil der Grad der perspektivischen Verdeckung für eine Erkennung des zweiten Objekts durch die Bildverarbeitungseinheit hinreichend niedrig ist.

Die vorhergehend beschriebene Abschätzung einer perspektivischen Verdeckung kann bei Bedarf mehrfach auf jeweils unterschiedliche virtuelle Objekte durchgeführt werden, wenn neben dem ersten Objekt und dem zweiten Objekt weitere virtuelle Objekte durch das Sensorsichtfeld erfasst sind. Zur Auswertung durch den Prüfling oder durch das die virtuelle Testumgebung betreibende Computersystem wird ein Signal des Sensorsystems erzeugt, dem die Information entnehmbar ist, dass alle durch das Sensorsichtfeld erfassten und durch das Sensorsystem erkennbaren virtuellen Objekte, die als perspektivisch nicht verdeckt gewertet sind, von der Bildverarbeitungseinheit erkannt wurden und alle durch das Sensorsichtfeld erfassten und durch das Sensorsystem erkennbaren virtuellen Objekte, die als perspektivisch verdeckt gewertet sind, von der Bildverarbeitungseinheit nicht erkannt wurden.

In einem möglichen Anwendungsfall bildet das Signal ein mögliches Signal eines realen Sensorsystems nach, insbesondere eines in Serie produzierten oder prototypischen Sensorsystems. In einem anderen möglichen Anwendungsfall bildet das Signal kein mögliches Signal eines realen Sensorsystems nach und wird beispielsweise zur Ansteuerung eines Prüfstands verwendet, der eingerichtet ist, einem realen bildgebenden Sensor die Existenz von Objekten innerhalb seines Sensorsichtfelds vorzutäuschen.

Ein Vorteil der Erfindung ist, dass sie eine schnelle und verlässliche Abschätzung der Erkennbarkeit eines virtuellen Objekts für ein bildverarbeitendes Sensorsystem ermöglicht, ohne dabei auf rechenaufwendige Verfahren aus der Computergraphik, beispielsweise Raytracing oder Z-Buffering, zurückzugreifen. Dadurch verringert das Verfahren auch den Hardwareaufwand für eine Simulation eines entsprechenden Sensorsystems, weil es ohne Anwendung eines Graphikprozessors (GPU, *Graphics Processing Unit*) durchführbar ist. Untersuchungen der Anmelderin haben ergeben, dass eine Softwareimplementierung eines erfindungsgemäßen Verfahrens verlässlich innerhalb einer Millisekunde durchlaufen kann. Das bedeutet, dass die Erfindung sich zur Anwendung auf ein Hardware-in-the-Loop-Verfahren eignet und das erfindungsgemäße Verfahren im Sinne eines Hardware-in-the-Loop-Verfahrens echtzeittauglich ist.

Der Sensor ist in der virtuellen Testumgebung an einem virtuellen Automaten aufgehängt, wobei das Signal des Sensorsystems von einem zur Ansteuerung des virtuellen Automaten eingerichteten Steuersystem oder von einer zur Ansteuerung des virtuellen Automaten eingerichteten Steuersoftware überwacht wird. Das Steuersystem kann insbesondere ein Prüfling sein, beispielsweise ein prototypisches eingebettetes System zur Steuerung eines physischen Automaten, das anhand eines Sensorbildes Entscheidungen über die Steuerung des Automaten trifft. Entsprechend kann die Steuersoftware insbesondere eine prototypische, für die Installation auf einem Steuersystem zur Steuerung eines physischen Automaten vorgesehene Steuersoftware sein, oder eine in der Entwicklung befindliche Programmlogik, die für die spätere Aufbereitung zur Installation auf einem entsprechenden Steuersystem vorgesehen ist. Der virtuelle Automat ist besonders bevorzugt ein virtuelles automatisiertes Vehikel, wobei unter einem Vehikel ein beliebiges zur Fortbewegung aus eigener Kraft eingerichtetes technisches System zu verstehen ist. Unter einer Aufhängung des Sensors an einem virtuellen Automaten ist insbesondere zu verstehen, dass die Ortskoordinaten des Sensors und die räumliche Orientierung des Sensorsichtfelds durch die Ortskoordinaten und/oder die räumliche Orientierung und/oder einen Zustand des virtuellen Automaten eindeutig vorgegeben sind.

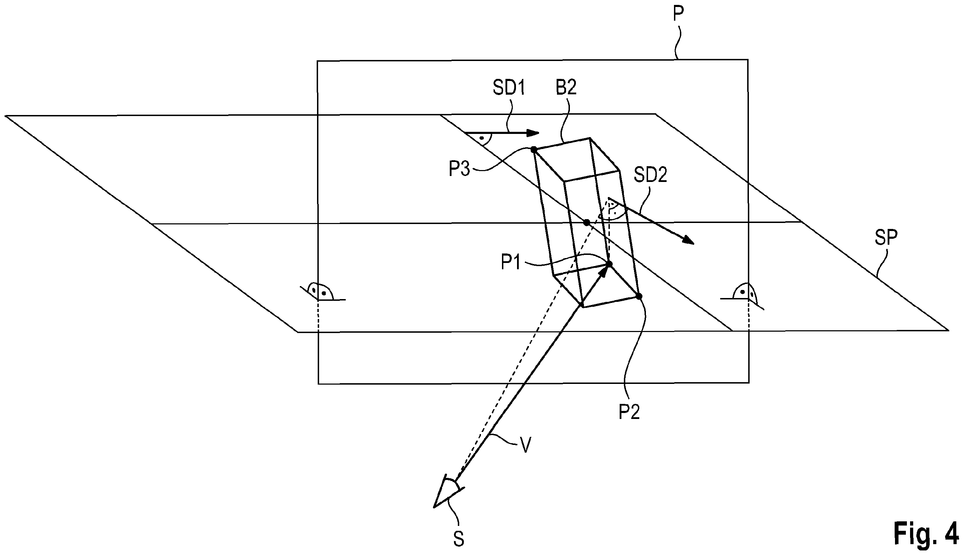

Zur weiteren Reduktion des Rechenaufwands ist es vorteilhaft, keine vollständige Projektion eines geometrischen Körpers auf die Projektionsebene durchzuführen, sondern nur eine Auswahl von Punkten des geometrischen Körpers auf die Projektionsebene zu projizieren und aus der von den Abbildern der ausgewählten Punkte gebildeten Punktwolke eine zweidimensionale Menge auf der Projektionsebene zu bilden, die näherungsweise dem Abbild des vollständig projizierten geometrischen Körpers entspricht und bevorzugt alle Punkte der Punktwolke umfasst, beispielsweise durch Bildung der konvexen Hülle der Punktwolke. Zur Projektion eines polyedrischen geometrischen Körpers wäre es beispielsweise möglich, alle Vertices oder eine Auswahl von Vertices des geometrischen Körpers zu projizieren. Besonders vorteilhaft werden ausschließlich Punkte eines geometrischen Körpers projiziert, deren Abbilder Elemente der konvexen Hülle des aus einer vollständigen Projektion des geometrischen Körpers resultierenden Abbilds sind. Ein numerisches Verfahren zur Ermittlung einer solchen Auswahl von Punkten ist in der Beschreibung der Figuren 4 bis 6 offenbart.

Die konvexe Hülle einer Menge von Punkten ist die kleinste konvexe Menge, die alle Punkte aus der Menge von Punkten umfasst. Eine Menge heißt konvex, wenn jede zwischen zwei Punkten der Menge gezogene Verbindungsgerade vollständig in der Menge enthalten ist. Ein Körper heißt konvex, wenn eine mit dem Körper deckungsgleiche Menge von Raumpunkten konvex ist.

Zur Prüfung der Existenz einer Schnittmenge und zur Ermittlung der Größe der Schnittmenge in Relation zur Größe des zweiten Abbilds kann ein bekanntes numerisches Verfahren zur Ausmessung von Flächen angewandt werden. Beispielsweise kann die Projektionsebene in hinreichend kleine Felder unterteilt werden, beispielsweise in Quadrate, Dreiecke oder Sechsecke. Die Erkennung der Existenz einer Schnittmenge und der Größenvergleich zum zweiten Abbild kann dann durch Zählung der Felder erfolgen, die zumindest teilweise sowohl innerhalb des ersten Abbilds als auch innerhalb des zweiten Abbilds bzw. die zumindest teilweise innerhalb des zweiten Abbilds liegen, und durch Vergleich der ermittelten Felderanzahlen.

Erfindungsgemäß wird auf eine Ausmessung von Flächen aber verzichtet, indem der Schwellwert für die Größe der Schnittmenge gleich null gesetzt ist und die Prüfung der Existenz einer Schnittmenge anhand einer Kollisionserkennung des ersten Abbilds und des zweiten Abbilds auf der Projektionsebene durchgeführt wird. Demnach genügt also der bloße Nachweis der Existenz einer Schnittmenge des ersten Abbilds und des zweiten Abbilds, um den zweiten virtuellen Körper als verdeckt zu werten, gesetzt den Fall, der euklidische Abstand des ersten virtuellen Objekts zum Sensor ist geringer als der euklidische Abstand des zweiten virtuellen Objekts zum Sensor. Die Größe der Schnittmenge ist unerheblich. Das Verfahren wird dadurch erheblich beschleunigt, weil der bloße Nachweis der Existenz oder Nichtexistenz einer Schnittmenge bei entsprechend geschickter Implementierung des Verfahrens weniger Rechenschritte in Anspruch nimmt als die Ausmessung einer Fläche.

Zur Kollisionserkennung des ersten Abbilds und des zweiten Abbilds ist die Anwendung eines Gilbert-Johnson-Keerthi-Algorithmus, nachfolgend GJK-Algorithmus, vorgesehen, wie er beispielsweise in dem Fachartikel "The Gilbert-Johnson-Keerthi Distance Algorithm" von Patrick Lindemann (geschrieben für das Media Informatics Proseminar on "Algorithms on Media Informatics", 2009) beschrieben ist.

Das erste und das zweite Abbild kollidieren genau dann, wenn ihre Minkowski-Differenz den Ursprung eines auf der Projektionsebene definierten kartesischen Koordinatensystems umfasst. Der GJK-Algorithmus sieht vor, die Minkowski-Differenz des ersten Abbilds und des zweiten Abbilds zu bilden und durch wiederholte Definition eines Dreiecks in der Minkowski-Differenz, wobei sich das Dreieck in jedem Iterationsschritt mehr dem Ursprung annähert, zu überprüfen, ob die Minkowski-Differenz den Ursprung umfasst. Der GJK-Algorithmus ist ausschließlich auf konvexe Mengen anwendbar.

Für einen schnellen Durchlauf des GJK-Algorithmus ist es vorteilhaft, wenn das erste Abbild und das zweite Abbild konvexe geschlossene Polygonzüge mit wenigen Vertices sind, sodass das erste Abbild und das zweite Abbild - und in der Folge deren Minkowski-Differenz - jeweils in eine kleine Anzahl von Dreiecken unterteilbar sind. Das kann dadurch sichergestellt werden, dass die geometrischen Körper als konvexe Polyeder mit wenigen Vertices ausgestaltet sind, wobei insbesondere vor der Durchführung der Projektion eines geometrischen Körpers eine Auswahl von Vertices des geometrischen Körper ermittelt wird, deren Abbilder Elemente der konvexen Hülle des Abbilds des geometrischen Körpers sind. Dabei wird jeweils nur die Auswahl von Vertices projiziert.

Mittels einer Kollisionserkennung, beispielsweise des GJK-Algorithmus, ist die Existenz bzw. Nichtexistenz einer Schnittmenge des ersten Abbilds und des zweiten Abbilds nachweisbar. Eine Kollisionserkennung liefert aber im allgemeinen keine Information über die Größe einer existierenden Schnittmenge. Wenn für die Prüfung der Existenz einer Schnittmenge eine Kollisionserkennung angewandt wird, bewirkt jede perspektivische Verdeckung des zweiten Objekts durch das erste Objekt eine Bewertung des zweiten Objekts als perspektivisch verdeckt, unabhängig von dem Grad der perspektivischen Verdeckung.

In einigen Fällen entspricht das nicht dem Verhalten realer bildverarbeitender Sensorsysteme. Im allgemeinen ist damit zu rechnen, dass ein reales Sensorsystem, das zur Identifikation von Objekten in einem Sensorbild eingerichtet ist, ein für das Sensorsystem erkennbares, aber perspektivisch verdecktes Objekt erkennt, sofern der Grad der perspektivischen Verdeckung einen gewissen Toleranzwert nicht überschreitet, und dass das Sensorsystem das perspektivisch verdeckte Objekt nicht erkennt, wenn der Grad der perspektivischen Verdeckung den Toleranzwert überschreitet.

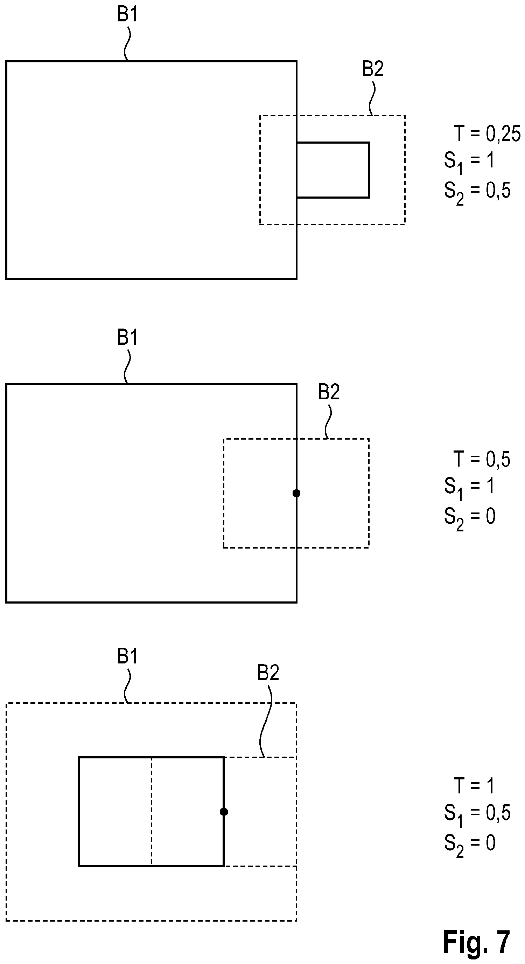

Um dieses Verhalten bei Anwendung einer Kollisionserkennung nachzubilden, ist vorgesehen, einen Toleranzwert für eine perspektivische Verdeckung eines für das Sensorsystem erkennbaren Objekts festzulegen, aus dem Toleranzwert einen Skalierungsfaktor zu berechnen und vor der Durchführung der Projektion zumindest den ersten geometrischen Körper oder den zweiten geometrischen Körper um den Skalierungsfaktor kleiner zu skalieren oder vor der Durchführung der Kollisionserkennung zumindest das erste Abbild oder das zweite Abbild um den Skalierungsfaktor kleiner zu skalieren. In der Beschreibung der Figur 7 ist ein beispielhafter Algorithmus zur Berechnung von Skalierungsfaktoren offenbart.

Im Allgemeinen, insbesondere bei entsprechend geschickter Programmierung des Projektionsvorgangs oder der Kollisionserkennung, ist es nicht grundsätzlich notwendig, den Projektionsvorgang abzuschließen. Zwecks einer weiteren Beschleunigung des erfindungsgemäßen Verfahrens ist es in einer besonders vorteilhaften Ausgestaltung vorgesehen, schon während eines laufenden Projektionsvorgangs des ersten geometrischen Körpers oder des zweiten geometrischen Körpers, insbesondere wobei die Projektionen des ersten geometrischen Körpers und des zweiten geometrischen Körpers parallel durchgeführt werden, eine Kollisionserkennung anhand der Abbilder der bereits auf die Projektionsebene projizierten Punkte des ersten geometrischen Körpers und des zweiten geometrischen Körpers durchzuführen und die noch nicht abgeschlossenen Projektionen abzubrechen, wenn anhand der Abbilder der bereits projizierten Punkte eine Kollision erkannt wird oder eine Kollision ausgeschlossen wird.

Die beanspruchte Erfindung umfasst auch ein zur Durchführung eines erfindungsgemäßen Verfahrens eingerichtetes Computersystem nach Anspruch 5 sowie ein Computerprogrammprodukt nach Anspruch 6 zur Einrichtung eines Computersystems zur Durchführung eines erfindungsgemäßen Verfahrens.

Nachfolgend wird anhand der Figuren ein vorteilhaftes Ausführungsbeispiel beschrieben, das die Erfindung näher erläutert. Es zeigen

Figur 1     ein zur Durchführung eines erfindungsgemäßen Verfahrens eingerichtetes Computersystem;

Figur 2     eine auf dem Computersystem hinterlegte virtuelle Testumgebung;

Figur 3     einen beispielhaften Projektionsvorgang eines ersten geometrischen Körpers und eines zweiten geometrischen Körpers;

Figur 4     ein Verfahren zur Auswahl eines zur Projektion vorgesehenen Punktes eines geometrischen Körpers;

Figur 5     ein erstes Beispiel für einen Abbruch eines Projektionsvorgangs nach Ausschluss einer Kollision;

Figur 6     ein zweites Beispiel für einen Abbruch eines Projektionsvorgangs nach Erkennung einer Kollision; und

Figur 7     beispielhafte Skalierungen des ersten oder des zweiten geometrischen Körpers.

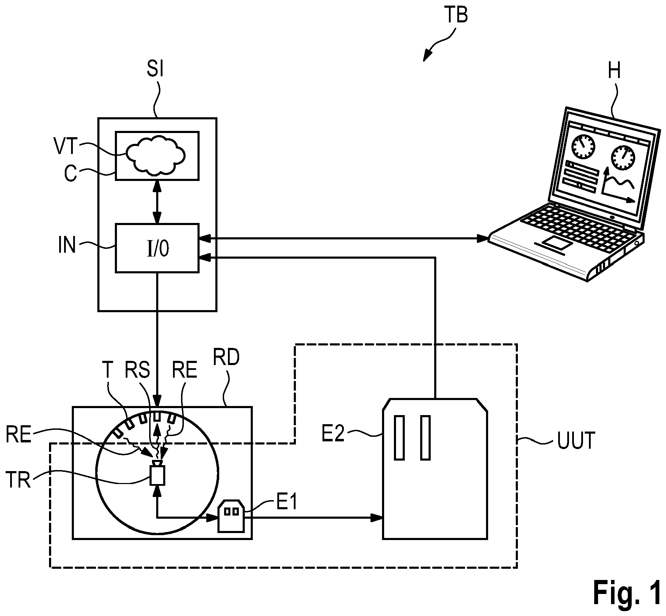

Die Abbildung der Figur 1 zeigt ein als Prüfstand eingerichtetes Computersystem TB für einen virtuellen Test eines als Fahrassistenzsystems ausgestalteten radargestützten Steuersystems UUT. Das Computersystem TB umfasst einen Simulationsrechner SI, einen Radarprüfstand RD und einen Hostrechner H. Der Simulationsrechner SI umfasst eine Prozessoreinheit C, auf der ein Echtzeitbetriebssystem (nicht dargestellt) und eine virtuelle Testumgebung VT hinterlegt sind, und eine Schnittstelleneinheit IN für den Austausch von Daten zwischen der virtuellen Testumgebung VT und der Peripherie des Simulationsrechners SI. Auf dem Hostrechner H hinterlegt ist ein Computerprogrammprodukt zur Einrichtung der virtuellen Testumgebung VT und zur Hinterlegung der virtuellen Testumgebung VT auf der Prozessoreinheit C, außerdem eine Bediensoftware zur Überwachung und Ansteuerung der virtuellen Testumgebung VT auf der Prozessoreinheit C während eines Simulationslaufs der virtuellen Testumgebung VT.

Das Computersystem TB umfasst als Prüfling das radargestützte Steuersystem UUT mit einer Sende-Empfangs-Einheit TR, einem ersten Steuergerät E1 und einem zweiten Steuergerät E2. Die Sende-Empfangs-Einheit TR ist eingerichtet, um einen Radarpuls RS auszusenden, mittels eines bildgebenden Radarsensors Radarechos RE des Radarpulses RS zu empfangen und anhand der Radarechos RE ein Sensorbild einer Umgebung der Sende-Empfangs-Einheit TR zu erstellen. Das erste Steuergerät E1 umfasst eine Bildverarbeitungseinheit zur Erkennung von Objekten in dem Sensorbild und ist außerdem eingerichtet, anhand der erkannten Objekte eine Beschreibung der Umgebung der Sende-Empfangs-Einheit zu erstellen. Das zweite Steuergerät E2 ist eingerichtet, die Beschreibung der Umgebung einzulesen, auszuwerten und anhand der Beschreibung der Umgebung ein virtuelles automatisiertes Vehikel VE in der virtuellen Testumgebung VT anzusteuern.

Der Radarprüfstand RD umfasst eine Anzahl auf Kreisbögen bewegbarer Radarsender T, die zur Aussendung von Radarpulsen zur Simulation von Radarechos RE eingerichtet sind. Der Simulationsrechner SI ist eingerichtet, um den Radarprüfstand RD anzusteuern. Der Simulationsrechner positioniert dabei die Radarsender T und stimmt die simulierten Radarechos RE zeitlich derart ab, dass der Radarprüfstand RD Radarechos RE von virtuellen Objekten in der virtuellen Testumgebung auf einen von der Sende-Empfangs-Einheit TR ausgesendeten Radarpuls nachbildet.

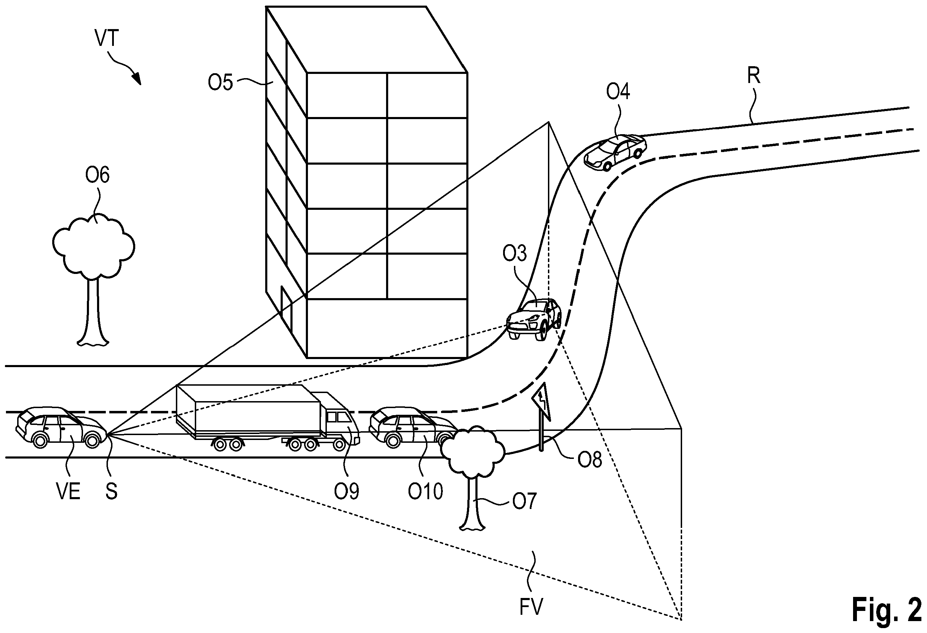

Die Abbildung der Figur 2 zeigt eine beispielhafte Momentaufnahme aus der virtuellen Testumgebung VT. Die virtuelle Testumgebung umfasst das von dem zweiten Steuergerät E2 angesteuerte virtuelle automatisierte Vehikel VE auf einer virtuellen Straße R und eine Vielzahl weiterer virtueller Objekte O3, ..., O10. Die virtuellen Objekte umfassen beispielhaft Fahrzeuge O3, O4, O9, O10, Gebäude O5, Bäume O6, O7 und Verkehrsschilder O8. Jedem virtuellen Objekt O3, ..., O10 sind statische oder veränderliche Ortskoordinaten in der virtuellen Testumgebung VT zugeordnet.

Ein Sensor S (verdeckt) ist an der Frontseite des virtuellen automatisierten Vehikels VE aufgehängt. Der Sensor S ist Teil einer Simulation eines Sensorsystems, das neben dem Sensor S auch eine Bildverarbeitungseinheit zur Identifikation von Objekten umfasst. Dem Sensor S ist ein pyramidenförmiges, vom Sensor S ausgehendes Sensorsichtfeld FV zugeordnet, dessen räumliche Orientierung durch die Ortskoordinaten und die räumliche Orientierung des virtuellen automatisierten Vehikels VE vorgegeben ist. Zumindest eine Untermenge der in der virtuellen Testumgebung VT vorhandenen Objekte wird als durch das Sensorsystem erkennbare Objekte bestimmt. Alle durch das Sensorsystem erkennbaren Objekte O1, ..., O8, die durch das Sensorsichtfeld FV erfasst sind, werden in eine vorläufige Liste erkannter virtueller Objekte aufgenommen. Für alle in der vorläufigen Liste aufgelisteten Objekte wird eine Überprüfung auf perspektivische Verdeckung durchgeführt, und alle als perspektivisch verdeckt gewerteten Objekte werden aus der vorläufigen Liste entfernt. Die nach Abschluss der Überprüfungen auf perspektivische Verdeckung noch aufgelisteten Objekte bilden eine Liste erkannter Objekte, und die virtuelle Testumgebung VT erzeugt ein Signal des Sensorsystems, dem die in der Liste erkannter Objekte aufgelisteten Objekte entnehmbar sind.

Die genaue Ausgestaltung des Signals des Sensorsystems kann je nach Anwendungsfall unterschiedlich sein. Das Signal kann weitere Informationen über die aufgelisteten Objekte tragen, beispielsweise deren absolute oder zum Sensor S relative Ortskoordinaten. Das Signal kann beispielsweise ein mögliches Signal eines echten Sensorsystems nachbilden und über eine Schnittstelleneinheit IN zur Auswertung durch ein Steuersystem E2 nach außen geführt werden. In dem in den Figuren 1 und 2 dargestellten Ausführungsbeispiel bildet das Signal kein Signal eines echten Sensorsystems nach und wird nicht nach außen geführt, sondern von dem Simulationsrechner SI zur Ansteuerung des Radarprüfstand RD ausgewertet.

In dem vorliegend beschriebenen Ausführungsbeispiel sind alle virtuellen Objekte O3, ..., O10 in der virtuellen Testumgebung VT durch das Sensorsystem erkennbar. In anderen Ausführungsbeispielen sind einige der in der virtuellen Testumgebung VT vorhandenen virtuellen Objekte durch das Sensorsystem nicht erkennbar. Grundsätzlich werden nur durch das Sensorsystem erkennbare Objekte in die vorläufige Liste erkennbarer Objekte aufgenommen. Vorteilhaft sind aber auch durch das Sensorsystem nicht erkennbare Objekte in der Lage, durch das Sensorsystem erkennbare Objekte perspektivisch zu verdecken.

Jedem Objekt O1, ..., O10 ist in der virtuellen Testumgebung VT als Hüllkörper ein Hüllquader B1, B2 zugeordnet, in der Fachwelt als Bounding Box bezeichnet.

Der Radarprüfstand RD soll nur Radarechos RE von Objekten O3, ..., O10 in der virtuellen Testumgebung VT nachbilden, die aus Sicht des Sensors S perspektivisch nicht verdeckt sind bzw. deren perspektivische Verdeckung einen Toleranzwert unterschreitet, sodass das erste Steuergerät E1 ein entsprechend perspektivisch verdecktes physisches Objekt als eigenständiges Objekt erkennen würde. In der Momentaufnahme, die in der Figur 2 dargestellt ist, sind drei Fahrzeuge O3, O9, O10, ein Gebäude O5, ein Baum O7 und ein Verkehrsschild O8 durch das Sensorsichtfeld FV erfasst und deshalb in die vorläufige Liste erkannter Objekte aufgenommen. Das Fahrzeug O10 ist aber durch das Fahrzeug O9 perspektivisch verdeckt, das Verkehrsschild O8 ist durch das Fahrzeug O9 teilweise perspektivisch verdeckt und das Fahrzeug O3 ist durch das Gebäude O5 teilweise perspektivisch verdeckt.

Die nachfolgend beschriebenen Figuren stellen ein erfindungsgemäßes Verfahren zur Abschätzung einer perspektivischen Verdeckung dar.

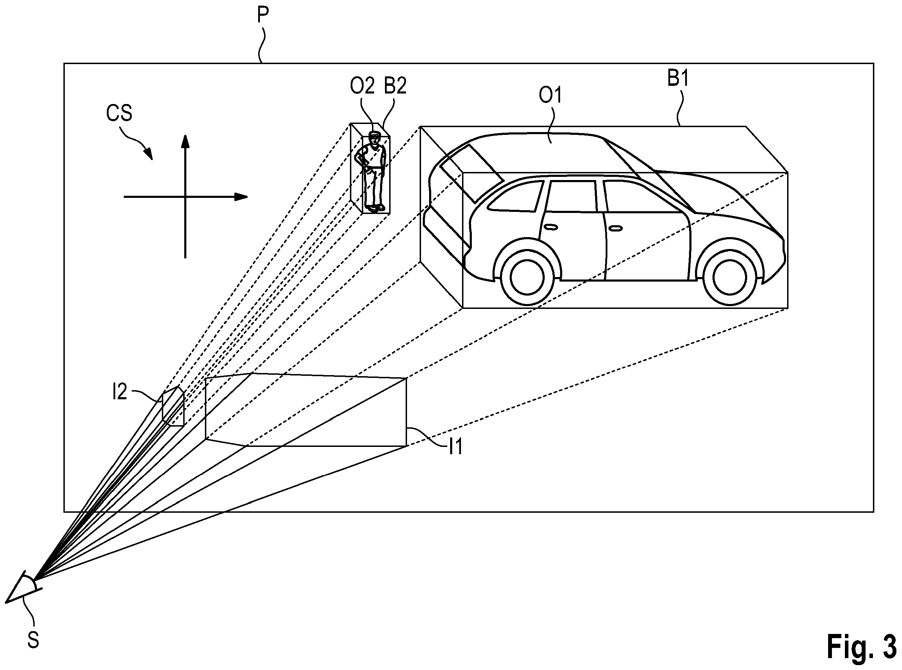

Die Abbildung der Figur 3 zeigt eine dreidimensionale Szene in der virtuellen Testumgebung VT mit dem Sensor S, einem ersten Objekt O1 in einem ersten Hüllquader B1 und einem zweiten Objekt O2 in einem zweiten Hüllquader B2. Das erste Objekt O1 und das zweite Objekt O2 seien beide von dem Sensorsichtfeld FV erfasst und in die vorläufige Liste erkannter Objekte aufgenommen. Zunächst wird anhand der Ortskoordinaten des ersten Objekts O1 und der Ortskoordinaten des Sensors S1 der euklidische Abstand des ersten Objekts O1 zum Sensor ermittelt, und anhand der Ortskoordinaten des zweiten Objekts O2 und der Ortskoordinaten des Sensors S wird der euklidische Abstand des zweiten Objekts O2 zum Sensor ermittelt. Die euklidischen Abstände werden verglichen und für das weiter vom Sensor S entfernte Objekt wird eine perspektivische Verdeckung durch das näher am Sensor S liegende Objekt aus Sicht des Sensors S geprüft. Beispielhaft wird geprüft, ob das zweite Objekt O2 durch das erste Objekt O1 aus Sicht des Sensors S perspektivisch verdeckt ist.

Dazu wird eine Projektionsebene P aufgespannt, auf der ein zweiachsiges lokales Koordinatensystem CS definiert ist, und der erste Hüllquader B1 und der zweite Hüllquader B2 werden zumindest teilweise auf die Projektionsebene P projiziert, wobei für die Projektion eine Zentralprojektion mit den Ortskoordinaten des Sensors S als Augpunkt angewandt wird. Da die Hüllquader B1, B2 konvexe Körper sind, sind auch deren Abbilder I1, I2 auf der Projektionsebene konvex. Die Projektion des ersten Hüllquader B1 geschieht derart, dass vor Durchführung der Projektion Vertices des ersten Hüllquaders B1 ermittelt werden, deren Abbilder auf der Projektionsebene P die Vertices des ersten Abbildes I1 des ersten Hüllquaders B1 sind. Ein numerisches Verfahren zur Ermittlung der entsprechenden Vertices ist nachfolgend in der Beschreibung der Figur 4 offenbart. Die Projektion aller sechs aus Sicht des Sensors S sichtbaren Vertices des ersten Hüllquaders B1 und die Bildung der konvexen Hülle der Abbilder der projizierten Vertices würde ein exaktes Abbild I1 des ersten Hüllquaders B1 ergeben.

Auf gleiche Weise wird auf der Projektionsebene P ein zweites Abbild I2 des zweiten Hüllquaders B2 erstellt. Anstelle von Hüllquadern sind auch andere Hüllkörper mit anderer Geometrie verwendbar, deren Abbilder beispielsweise größere Übereinstimmung mit den Abbildern der durch die Hüllkörper eingehüllten virtuellen Objekte aufweisen.

Mittels eines GJK-Algorithmus wird eine Kollisionserkennung des ersten Abbilds I1 und des zweiten Abbilds I1 durchgeführt. Eine Kollision liegt genau dann vor, wenn eine Schnittmenge des ersten Abbilds I1 und des zweiten Abbilds I2 existiert, und die Existenz einer Schnittmenge wird als perspektivische Verdeckung des zweiten Objekts O2 durch das erste Objekts O1 gewertet. Der GJK-Algorithmus sieht vor, zunächst die Minkowski-Differenz des ersten Abbilds I1 und des zweiten Abbilds I2 in dem lokalen Koordinatensystem CS zu bilden. Die Minkowski-Differenz $\Sigma$ zweier Mengen A, B ist die Menge

$$\Sigma(A, B) = \{a - b \mid a \in A, b \in B\},$$

also die Menge, die durch Subtraktion jedes Elements von B von jedem Element von A entsteht. Eine Schnittmenge von A und B existiert genau dann, wenn der Ursprung ein Element von $\Sigma$ ist. Der GJK-Algorithmus sieht vor, durch eine Zerlegung der Minkowski-Differenz $\Sigma$ in Dreiecke zu überprüfen, ob der Ursprung des lokalen Koordinatensystem CS ein Element der Minkowski-Differenz $\Sigma$ des ersten Abbilds I1 und des zweiten Abbilds I2 ist. Durch die Verwendung polyedrischer Hüllkörper für das erste Objekt O1 und das zweite Objekt O2 mit nur wenigen Vertices sind das erste Abbild I1 und das zweite Abbild I2, und in der Folge auch deren Minkowski-Differenz $\Sigma$, Polygonzüge mit wenigen Vertices, sind also in eine geringe Anzahl von Dreiecken (Simplexe) zerlegbar. Dadurch ist ein schneller Durchlauf des GJK-Algorithmus begünstigt.

Die Abbildung der Figur 3 zeigt allein zur Veranschaulichung des Projektionsvorgangs jeweils eine vollständige Projektion des ersten Hüllquaders B1 und B2. Tatsächlich ist vorgesehen, beide Hüllquader B1, B2 parallel zu projizieren, schon während des Projektionsvorgangs die Minkowski-Differenz der bereits projizierten Punktwolken der Vertices beider Hüllkörper B1, B2 zu bilden oder teilweise zu bilden und den Projektionsvorgang abzubrechen, sobald anhand der Abbilder der bereits projizierten Vertices bzw. Punkte eine Kollision des ersten Abbilds I1 und des zweiten Abbilds I2 erkannt oder ausgeschlossen wird. Dieser Aspekt der Erfindung wird in den nachfolgenden Beschreibungen näher erläutert.

Die Abbildung der Figur 4 skizziert einen Suchalgorithmus zur Bestimmung einer zur Projektion vorgesehenen Auswahl von Punkten eines Hüllkörpers am Beispiel des zweiten Hüllquaders B2.

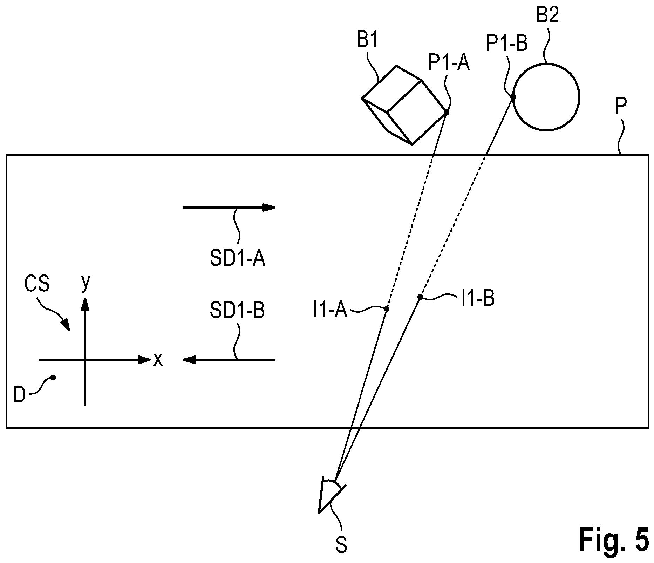

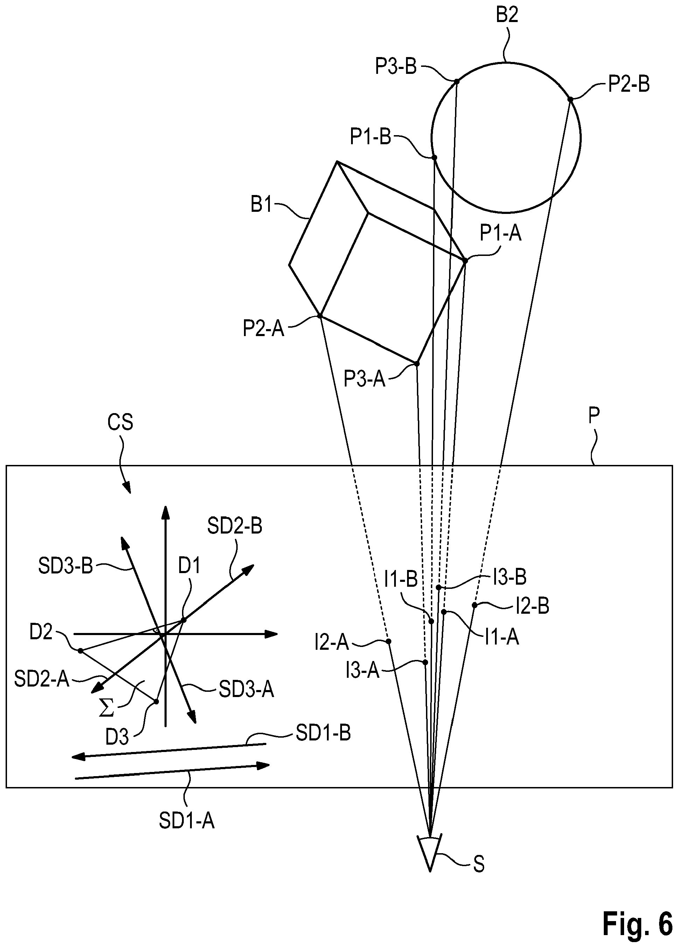

Zunächst wird eine parallel zur Projektionsebene P liegende Initialsuchrichtung SD1 bestimmt (Regeln zur Auswahl der Initialsuchrichtung werden in den Beschreibungen der Figuren 5 und 6 vorgestellt) und anhand der Initialsuchrichtung SD1 eine Suchebene SP aufgespannt, die folgende Bedingungen erfüllt:

- Die Suchebene SP liegt orthogonal zur Projektionsebene P, und

- die Suchebene SP liegt parallel zur Suchrichtung SD1.

Der Suchalgorithmus umfasst die folgenden Schritte:

1) Suche einen ersten Punkt P1 des zweiten Hüllquaders, der bezogen auf die Suchrichtung SD1 am weitesten außen liegt.

Der erste Punkt P1 lässt sich gleichbedeutend auch als der Punkt definieren, auf dem eine Fläche, deren Normalenvektor parallel zur Suchrichtung SD1 liegt, aufliegen würde, sodass die Fläche nur einen einzigen Schnittpunkt mit dem zweiten Hüllquader B2 umfasst und nach einer beliebig kleinen Verschiebung in Suchrichtung SD1 keinen Schnittpunkt mit dem zweiten Hüllquader B2 mehr aufweisen würde.

    2) Ermittle den Verbindungsvektor V vom Augpunkt, d.h. den Ortskoordinaten des Sensors S, zum ersten Punkt P1.

    3) Bilde eine neue Suchrichtung SD2, die parallel zur Suchebene SP und orthogonal zum Verbindungsvektor V liegt und deren Skalarprodukt mit der alten Suchrichtung SD1 positiv ist, um einen zweiten Punkt P2 zu suchen, der bezogen auf die neue Suchrichtung SD2 am weitesten außen liegt.

    4) Wiederhole die Schritte 1) bis 3), bis der Abstand zwischen dem im aktuellen Iterationsschritt gefundenen Punkt und dem im vorhergehenden Iterationsschritt gefundenen Punkt einen Toleranzwert unterschreitet.

In dem in der Figur 4 dargestellten Beispiel würde anhand des beschriebenen Suchalgorithmus der zweite Punkt P2 als zur Projektion vorgesehener Punkt des zweiten Hüllquaders B2 ermittelt werden. Ein nachfolgender Suchlauf mit in Gegenrichtung zur Suchrichtung SD1 liegender Initialsuchrichtung würde einen dritten Punkt P3 als zur Projektion vorgesehenen Punkt ermitteln. Grundsätzlich kann der Suchalgorithmus beliebig häufig mit wechselnden Suchrichtungen durchgeführt werden. Jeder Suchlauf führt zur Ermittlung eines Randpunktes des zweiten Hüllquaders B2, der aus Sicht des Sensors S perspektivisch weit außen liegt und bei einer vollständigen Zentralprojektion des zweiten Hüllquader B2 mit den Ortskoordinaten des Sensors S als Augpunkt zur konvexen Hülle des Abbildes des zweiten Hüllquaders B2 gehören würde.

Durch mehrfache Ausführung des Suchalgorithmus mit unterschiedlichen Initialsuchrichtungen wird eine Auswahl von Punkten P2, P3 des zweiten Hüllquaders B2 ermittelt, und die Projektion des zweiten Hüllquaders wird durchgeführt, indem die Auswahl von Punkten P2, P3 in einer Zentralprojektion mit den Ortskoordinaten des Sensors S als Augpunkt auf die Projektionsebene P projiziert wird.

Sofern die Auswahl von Punkten P2, P3 hinreichend umfangreich ist, entspricht das Abbild I2 exakt dem tatsächlichen Abbild des zweiten Hüllkörpers, wie es sich aus einer vollständig durchgeführten Zentralprojektion ergeben würde. Der Suchalgorithmus ist auf beliebige Hüllkörper anwendbar, auch auf nichtpolyedrische Hüllkörper, beispielsweise zylindrische Hüllkörper, wobei die Hüllkörper vorteilhaft konvexe Hüllkörper sind. Durch Ermittlung einer Auswahl von Punkten eines konvexen Hüllkörpers anhand des Suchalgorithmus und Bildung der konvexen Menge der Abbilder der Auswahl von Punkten ist immer ein Abbild des Hüllkörpers erstellbar, das näherungsweise dem aus einer vollständig durchgeführten Projektion des Hüllkörpers resultierenden Abbild entspricht.

Die Bestimmung einer Auswahl von Punkten zur Projektion wird für den ersten Hüllquader B1 und für den zweiten Hüllquader B2 parallel durchgeführt, und die anhand des Suchalgorithmus bestimmten Punkte werden jeweils unmittelbar nach ihrer Bestimmung auf die Projektionsebene P projiziert. Auf der Projektionsebene P wird schon während des noch laufenden Projektionsvorgangs des ersten Hüllquaders B1 und des zweiten Hüllquaders B2 eine Kollisionserkennung anhand der Abbilder der bereits projizierten Punkte durchgeführt, und die Projektion wird abgebrochen, wenn anhand der Abbilder der bereits projizierten Punkte eine Kollision erkannt wird oder eine Kollision ausgeschlossen wird.

Die Abbildung der Figur 5 illustriert ein erstes Beispiel für einen vorzeitigen Abbruch einer Projektion eines ersten Hüllkörpers B1 und eines zweiten Hüllkörpers B2. In dem Beispiel ist der erste Hüllkörper B1 als Würfel und der zweite Hüllkörper B2 als Kugel dargestellt. Zuerst wird eine erste Initialsuchrichtung SD1-A festgelegt, um anhand des in der Figur 4 illustrierten Suchalgorithmus den aus Sicht des Sensors S am weitesten in Richtung der ersten Initialsuchrichtung SD1-A liegenden ersten Punkt P1-A des ersten Hüllkörpers B1 zu finden.

Zur Ermittlung der ersten Initialsuchrichtung SD1-A ist in dem beschriebenen Ausführungsbeispiel grundsätzlich vorgesehen, die Ortskoordinaten des ersten Hüllkörpers B1 von den Ortskoordinaten des zweiten Hüllkörpers B2 zu subtrahieren und den sich aus der Subtraktion ergebenden Verbindungsvektor auf die Projektionsebene P zu projizieren.

Der erste Punkt P1-A wird unmittelbar nach seiner Ermittlung auf die Projektionsebene P projiziert, um ein Abbild I1-A des ersten Punktes zu erzeugen. Nachfolgend wird eine der ersten Initialsuchrichtung SD1-A entgegengesetzte zweite Initialsuchrichtung SD1-B festgelegt, um den aus Sicht des Sensors S am weitesten in Richtung der zweiten Initialsuchrichtung SD1-B liegenden zweiten Punkt P1-B des zweiten Hüllkörpers B2 zu finden. Der zweite Punkt P1-B wird unmittelbar nach seiner Ermittlung auf die Projektionsebene P projiziert, um ein Abbild I1-B des zweiten Punktes zu erzeugen.

Unmittelbar nach Projektion des zweiten Punktes P1-B wird die Differenz D des Abbilds des ersten Punktes I1-A und des Abbilds des zweiten Punktes I1-B gebildet. Die Differenz D ist ein Punkt der Minkowski-Differenz Σ der Abbilder des ersten Hüllkörpers B1 und des zweiten Hüllkörpers B2. Aus dem negativen Skalarprodukt der ersten Initialsuchrichtung SD1-A und der Differenz D folgt, da sowohl der erste Hüllkörper B1 als auch der zweite Hüllkörper B2 konvexe Körper sind, dass das Abbild I1-A des ersten Punkts und das Abbild I1-B des zweiten Punkts die einander nächstliegenden Punkte der Abbilder des ersten Hüllkörpers B1 und des zweiten Hüllkörpers B2 sind und demnach die Differenz D der dem Ursprung des lokalen Koordinatensystems CS nächstliegende Punkt der Minkowski-Differenz Σ ist. Die Minkowski-Differenz Σ kann demnach nicht den Ursprung des lokalen Koordinatensystems CS umfassen. Die Projektion wird deshalb nach der Projektion des ersten Punkts P1-A und des zweiten Punkts P1-B abgebrochen, und das von dem zweiten Hüllkörper B2 eingehüllte zweite Objekt O2 wird als perspektivisch nicht verdeckt gewertet, sofern der zweite Hüllkörper B2 nicht von einem weiteren Hüllkörper außer dem ersten Hüllkörper B1 perspektivisch verdeckt ist.

Die Abbildung der Figur 6 illustriert ein zweites Beispiel für einen vorzeitigen Abbruch einer Projektion und gleichzeitig eine vorteilhafte Ausgestaltung des Projektionsvorgangs. Grundsätzlich sind für die Erkennung einer perspektivischen Verdeckung des zweiten Hüllkörpers B2 durch den ersten Hüllkörper B1 die nachfolgend aufgelisteten Verfahrensschritte vorgesehen. Die Auswahl eines zur Projektion vorgesehenen Punktes geschieht dabei grundsätzlich wie in der Beschreibung der Figur 4 beschrieben, unter Verwendung der aktuell gültigen Initialsuchrichtung. Nachfolgend wird angenommen, dass der euklidische Abstand des zweiten virtuellen Objekts O2 zum Sensor S größer ist als der euklidische Abstand des ersten virtuellen Objekts O1 zum Sensor S.

Die Verfahrensschritte sind wie folgt:

1.1) Definiere eine erste Initialsuchrichtung SD1-A durch Projektion des Vektors, der sich durch Subtraktion der Ortskoordinaten des ersten virtuellen Objekts O1 von den Ortskoordinaten des zweiten virtuellen Objekts O2 ergibt, auf die Projektionsebene P, und definiere eine der ersten Initialsuchrichtung SD1-A entgegengesetzte Initialsuchrichtung SD1-B.

1.2) Wähle anhand der ersten Initialsuchrichtung SD1-A einen ersten Punkt P1-A des ersten Hüllkörpers B1 aus und projiziere ihn auf die Projektionsebene P, um ein Abbild I1-A des ersten Punktes P1-A des ersten Hüllkörpers B1 zu erzeugen. Wähle anhand der entgegengesetzten Initialsuchrichtung SD1-B einen ersten Punkt P1-B des zweiten Hüllkörpers B2 aus und projiziere ihn auf die Projektionsebene P, um ein Abbild I1-B des ersten Punktes P1-B des zweiten Hüllkörpers B2 zu erzeugen

1.3) Bilde eine erste Differenz D1 der Abbilder I1-A und I1-B in dem lokalen Koordinatensystem CS.

2.1) Definiere eine zweite Initialsuchrichtung SD2-A, die ausgehend von der ersten Differenz D1 in Richtung des Ursprungs des lokalen Koordinatensystems CS zeigt, wähle anhand der zweiten Initialsuchrichtung SD2-A einen zweiten Punkt P2-A des ersten Hüllkörpers B1 aus und projiziere ihn auf die Projektionsebene P, um ein Abbild I2-A des Punktes P2-A zu erzeugen.

2.2) Wähle anhand einer der zweiten Initialsuchrichtung SD2-A entgegengesetzten Initialsuchrichtung SD2-B einen zweiten Punkt P2-B des zweiten Hüllkörpers B2 aus und projiziere ihn auf die Projektionsebene P, um ein Abbild I2-B des Punktes P2-B zu erzeugen.

2.3) Bilde eine zweite Differenz D2 der zuletzt erzeugten Abbilder I2-A und I2-B im lokalen Koordinatensystem CS.

3.1) Definiere eine dritte Initialsuchrichtung SD3-A, die senkrecht zur Verbindungslinie der ersten Differenz D1 und der zweiten Differenz liegt und in Richtung des Ursprungs des lokalen Koordinatensystems CS zeigt, wähle anhand der dritten Initialsuchrichtung SD3-A einen dritten Punkt P3-A des ersten Hüllkörpers B1 aus und projiziere ihn auf die Projektionsebene P, um ein Abbild I3-A des dritten Punktes P3-A des ersten Hüllkörpers B1 zu erzeugen.

3.2) Wähle anhand einer der dritten Suchrichtung SD3-A entgegengesetzten Suchrichtung SD3-B einen dritten Punkt P3-B des zweiten Hüllkörpers B2 aus und projiziere ihn auf die Projektionsebene P, um ein Abbild I3-B des Punktes P3-B zu erzeugen.

3.3) Bilde eine dritte Differenz D3 der zuletzt erzeugten Abbilder I3-A und I3-B im lokalen Koordinatensystem CS.

4) Wenn das aus der ersten Differenz D1, der zweiten Differenz D2 und der dritten Differenz D3 aufgespannte Simplex der Minkowski-Differenz Σ den Ursprung des lokalen Koordinatensystems CS umfasst, brich den Projektionsvorgang ab und werte das zweite virtuelle Objekt O2 als perspektivisch verdeckt.

5.1) Wenn das Simplex den Ursprung des lokalen Koordinatensystems CS nicht umfasst, verwirf den am weitesten vom Ursprung entfernten Eckpunkt des Simplex und definiere eine neue Initialsuchrichtung, die senkrecht zur Verbindungslinie der beiden verbleibenden Eckpunkte liegt und in Richtung des Ursprungs des lokalen Koordinatensystems CS zeigt. Wähle anhand der neuen Suchrichtung einen Punkt des ersten Hüllkörpers B1 aus und projiziere ihn auf die Projektionsebene P, um ein Abbild des Punktes zu erzeugen.

5.2) Wähle anhand einer der neuen Initialsuchrichtung entgegengesetzten Suchrichtung einen Punkt des zweiten Hüllkörpers B2 aus und projiziere ihn auf die Projektionsebene P, um ein Abbild des Punktes zu erzeugen.

5.3) Bilde die Differenz der zwei zuletzt erzeugten Abbilder im lokalen Koordinatensystem CS und verwende die Differenz als neuen Eckpunkt, um zusammen mit den zwei verbleibenden Eckpunkten ein neues Simplex aufzuspannen.

6) Wiederhole die Schritte 5.1 bis 5.3, bis entweder das aktuelle Simplex den Ursprung des lokalen Koordinatensystems CS umfasst (Abbruchkriterium A) oder das Skalarprodukt der aktuellen für die Auswahl eines Punktes des ersten Hüllkörpers B1 verwendeten Initialsuchrichtung und des anhand der aktuellen Initialsuchrichtung gesetzten Eckpunkts negativ ist (Abbruchkriterium B).

Wenn Abbruchkriterium A eintritt, wird das zweite virtuelle Objekt O2 als perspektivisch verdeckt gewertet. Wenn Abbruchkriterium B eintritt, wird das zweite virtuelle Objekt O2 als perspektivisch nicht verdeckt gewertet. Die Prüfung und Anwendung des Abbruchkriteriums A ist naturgemäß erst dann möglich, wenn mindestens drei Eckpunkte D1, D2, D3 ermittelt wurden. Abbruchkriterium B ist schon nach Ermittlung eines einzigen Eckpunkts anwendbar. In dem in der Figur 6 gezeigten Beispiel wird der Projektionsvorgang nach Ermittlung des dritten Eckpunkts D3 abgebrochen und das zweite virtuelle Objekt O2 als perspektivisch verdeckt gewertet, weil das durch die drei Eckpunkte D1, D2, D3 aufgespannte Simplex der Minkowski-Differenz $\Sigma$ den Ursprung des lokalen Koordinatensystems CS umfasst und damit eine teilweise perspektivische Verdeckung des zweiten Hüllkörpers B2 durch den ersten Hüllkörper B1 nachgewiesen ist.

Anhand des GJK-Algorithmus ist zwar die Existenz einer Schnittmenge zweier Mengen nachweisbar, aber nicht die Größe der Schnittmenge messbar. Demzufolge führt eine beliebig kleine perspektivische Verdeckung des zweiten Hüllkörpers B2 durch den ersten Hüllkörper dazu, dass der zweite Hüllkörper B2 als perspektivisch verdeckt und demnach als für das Sensorsystem nicht sichtbar gewertet wird. Von einem realen Sensorsystem mit einem bildgebenden Sensor S und einer Bildverarbeitungseinheit ist aber zu erwarten, dass die Bildverarbeitungseinheit auch perspektivisch teilweise verdeckte Objekte als solche erkennt, sofern die perspektivische Verdeckung einen Toleranzwert nicht überschreitet.

Um dieses realistische Verhalten nachzubilden, ist ein Toleranzwert $T$ für eine perspektivische Verdeckung eines virtuellen Objekts O1, ..., O8 festlegbar. Ein Toleranzwert von T = 0,25 bedeutet beispielsweise, dass ein sich im Sensorsichtfeld FV befindliches und durch das Sensorsystem erkennbares virtuelles Objekt durch das Sensorsystem erkannt werden soll, wenn aus Sicht des Sensors S nicht mehr als etwa ein Viertel des Fläche des virtuellen Objekts perspektivisch verdeckt ist. In Abhängigkeit von dem gewählten Toleranzwert wird zumindest der erste Hüllkörper B1 oder der zweite Hüllkörper B2 kleiner skaliert. Das zweite virtuelle Objekt O2 wird als perspektivisch verdeckt gewertet, wenn eine Schnittmenge der Abbilder I1, I2 der skalierten Hüllkörper existiert.

Für den ersten Hüllkörper B1 wird ein erster Skalierungsfaktor $s_1$ eingeführt. Für den zweiten Hüllkörper B2 wird ein zweiter Skalierungsfaktor $s_2$ eingeführt. Für Toleranzwerte im Bereich von

$$0 \leq T \leq 0,5$$

werden die Skalierungsfaktoren wie folgt festgelegt:

$$s_1 = 1$$

$$s_2 = 2(0,5 - T)$$

Für Toleranzwerte im Bereich von

$$0,5 < T \leq 1$$

werden die Skalierungsfaktoren wie folgt festgelegt:

$$s_1 = 1 - 2\left(\sqrt{\frac{A_2}{A_1}}\right)(T - 0,5)$$

$$s_2 = 0$$

$A_1$ ist ein exakter oder abgeschätzter Wert für die Fläche des ersten Abbilds I1 des ersten Hüllkörpers B1 unter der Annahme einer vollständig durchgeführten Projektion, und $A_2$ ist ein exakter oder abgeschätzter Wert für die Fläche des zweiten Abbilds I2 des zweiten Hüllkörpers B2. Die Fläche $A_1$ des Abbilds eines quaderförmigen Hüllkörpers wird anhand folgender Formel abgeschätzt:

$$A_1 = \frac{1}{L^2} \sum_{i=1}^{3} D_i \cdot e_s \cdot e_{n,i}$$

Dabei sind L der euklidische Abstand zwischen Projektionsebene P und den Ortskoordinaten des von dem Hüllkörper eingehüllten virtuellen Objekts, $D_1$, $D_2$ und $D_3$ drei zueinander orthogonale Flächen des Quaders, $e_s$ der Differenzvektor der Ortskoordinaten des von dem Hüllkörper eingehüllten virtuellen Objekts und des Sensors S, und $e_{n,1}$, $e_{n,2}$, und $e_{n,3}$ sind die Flächennormalen.

Die Abbildung der Figur 7 zeigt Anwendungen dieser Skalierungsvorschrift für drei unterschiedliche Toleranzwerte. Der erste Hüllkörper B1 und der zweite Hüllkörper B2 sind in der Abbildung der Deutlichkeit halber als zweidimensionale Rechtecke der Kantenlängen 8cm $\times$ 6cm und 6cm $\times$ 4cm dargestellt. Gestrichelte Linien stellen jeweils den unskalierten Hüllkörper, durchgehende Linien den skalierten Hüllkörper dar.

Bei einem Toleranzwert $T = 0,25$ bleibt der erste Hüllkörper B1 unskaliert, und für den zweiten Hüllkörper ergibt sich ein Skalierungsfaktor von 0,5. Der erste Hüllkörper B1 muss etwa ein Viertel der sichtbaren Fläche des unskalierten zweiten Hüllkörpers B2 verdecken, bevor sich eine perspektivische Verdeckung des skalierten zweiten Hüllkörpers B2 einstellt.

Bei einem Toleranzwert von $T = 0,5$ bleibt der erste Hüllkörper B1 unskaliert, und der zweite Hüllkörper B2 wird auf Punktgröße skaliert. Der erste Hüllkörper B1 muss die sichtbare Fläche des unskalierten zweiten Hüllkörpers B2 etwa zur Hälfte verdecken, bevor sich eine perspektivische Verdeckung des skalierten zweiten Hüllkörpers B2 einstellt.

Bei einem Toleranzwert von $T = 1$ ergibt sich für den ersten Hüllkörper B1 ein Skalierungsfaktor von $s_1 = 0,5$, und der zweite Hüllkörper B2 wird auf Punktgröße skaliert. Der unskalierte erste Hüllkörper B1 muss den unskalierten zweiten Hüllkörper B2 näherungsweise vollständig bedecken, bevor sich eine perspektivische Verdeckung des skalierten zweiten Hüllkörpers B2 durch den skalierten ersten Hüllkörper B1 einstellt.

Das in der Figur 7 illustrierte Skalierungsverfahren ist allgemeingültig anwendbar, wenn alle virtuellen Objekte O1, ..., O8 in der virtuellen Testumgebung VT ähnliche Abmessungen aufweisen. Andernfalls kann eine allgemeingültige Anwendung problematisch sein. Da der potentiell perspektivisch verdeckte zweite Hüllkörper B2 bis auf Punktgröße skaliert werden kann, kann sich eine perspektivische Verdeckung durch einen beliebig kleinen ersten Hüllkörper B1 ergeben, was kein realistisches Verhalten eines Sensorsystems gemäß Erfindung ist. Beispielsweise kann ein erfindungsgemäßes Verfahren in einer Situation, wie sie in der Figur 3 dargestellt ist, zu dem Ergebnis kommen, dass das Fahrzeug O1 für das radargestützte Steuersystem UUT nicht sichtbar ist, weil es durch das Kind O2 verdeckt ist.

Im Falle stark voneinander abweichender Abmessungen der virtuellen Objekte O1, ..., O8 in der virtuellen Testumgebung VT ist es deshalb vorteilhaft, anhand der zuvor beschriebenen Abschätzungen der Flächen der Abbilder I1, I2 eine Vorbewertung der Plausibilität einer perspektivischen Verdeckung vorzunehmen. Beispielsweise kann das Verfahren derart erweitert werden, dass die Prüfung auf eine perspektivische Verdeckung nur durchgeführt wird, wenn die abgeschätzte Fläche des ersten Abbilds I1 in Relation zur abgeschätzten Fläche des zweiten Abbilds I2 einen vorgegebenen Wert überschreitet.

**Patentansprüche**

1. Verfahren zur Simulation eines Sensorsystems, das einen bildgebenden Sensor (S) und eine Bildverarbeitungseinheit zur Erkennung von Objekten (O1, ..., O10) in dem von dem Sensor (S) ausgegebenen Sensorbild umfasst,

wobei in einer eine Vielzahl virtueller Objekte (O1, ..., O10) umfassenden virtuellen Testumgebung (VT), in der der Sensor (S) an einem virtuellen Automaten, insbesondere einem virtuellen automatisierten Vehikel (VE) aufgehängt ist, dem Sensor (S) Ortskoordinaten zugeordnet werden und jedem virtuellen Objekt (O1, ..., O10) Ortskoordinaten zugeordnet werden;

dem Sensor (S) ein Sensorsichtfeld (FV) in der virtuellen Testumgebung (VT) zugeordnet wird und eine Anzahl von Objekten aus der Vielzahl virtueller Objekte (O1, ..., O10) als durch das Sensorsystem erkennbare virtuelle Objekte bestimmt werden;

ein Simulationslauf gestartet wird, in dessen Verlauf dem Sensor (S) oder mindestens einem virtuellen Objekt (O1, ..., O10) zyklisch neue Ortskoordinaten in der virtuellen Testumgebung (VT) zugewiesen werden,

und zyklisch überprüft wird, ob zumindest ein virtuelles Objekt (O1, ..., O10) durch das Sensorsichtfeld (FV) erfasst ist;

**dadurch gekennzeichnet, dass** ein Toleranzwert für eine perspektivische Verdeckung eines für das Sensorsystem erkennbaren virtuellen Objekts (O1, ..., O10) festgelegt wird und aus dem Toleranzwert ein Skalierungsfaktor berechnet wird;

in dem Fall, dass ein erstes virtuelles Objekt (O1) und ein durch das Sensorsystem erkennbares zweites virtuelles Objekt (O2) durch das Sensorsichtfeld (FV) erfasst ist,

- eine für eine Zentralprojektion des ersten virtuellen Objekts (O1) und des zweiten virtuellen Objekts (O2) mit den Ortskoordinaten des Sensors (S) als Augpunkt geeignete Projektionsebene (P) aufgespannt wird;
- auf der Projektionsebene (P) ein erstes Abbild (I1) gebildet wird, indem ein skalierter oder unskalierter erster Hüllkörper (B1) des ersten virtuellen Objekts (O1) in einer Zentralprojektion mit den Ortskoordinaten des Sensors (S) als Augpunkt zumindest teilweise auf die Projektionsebene (P) projiziert wird;
- auf der Projektionsebene (P) ein zweites Abbild (I2) gebildet wird, indem ein skalierter oder unskalierter zweiter Hüllkörper (B2) des zweiten virtuellen Objekts (O2) in einer Zentralprojektion mit den Ortskoordinaten des Sensors (S) als Augpunkt zumindest teilweise auf die Projektionsebene (P) projiziert wird,

wobei zur Bildung eines Abbilds (I1, I2) eines Hüllkörpers (B1, B2) eine Auswahl von Punkten (P1-A, P2-A, P1-B, ..., P3-B) des Hüllkörpers (B1, B2) projiziert wird und

aus der von den Abbildern (I1-A, I1-B, I2-A, ..., I2-B) der ausgewählten Punkte gebildeten Punktwolke auf der Projektionsebene (P) die jeweiligen konvexen Hüllen der Abbilder (I1, I2) gebildet werden;

    - durch eine Kollisionserkennung unter Anwendung eines Gilbert-Johnson-Keerthi-Algorithmus geprüft wird, ob eine Schnittmenge des ersten Abbilds (I1) und des zweiten Abbilds (I2) existiert;
    - in dem Fall, dass

        i. eine Schnittmenge existiert,
        ii. der euklidische Abstand zwischen Sensor (S) und erstem virtuellem Objekt (O1) geringer als der euklidische Abstand zwischen Sensor und zweitem virtuellem Objekt (O2) ist,
        das zweite virtuelle Objekt (O2) als perspektivisch verdeckt gewertet wird;

    - in dem Fall, dass mindestens eine der Bedingungen i. oder ii. nicht erfüllt ist, das zweite virtuelle Objekt (O2) als perspektivisch nicht verdeckt gewertet wird; und
    - ein Signal des Sensorsystems erzeugt wird, dem die Information entnehmbar ist, dass alle durch das Sensorsichtfeld (FV) erfassten und durch das Sensorsystem erkennbaren virtuellen Objekte (O1, ..., O10), die als perspektivisch nicht verdeckt gewertet sind, von der Bildverarbeitungseinheit erkannt wurden und alle durch das Sensorsichtfeld (FV) erfassten und durch das Sensorsystem erkennbaren virtuellen Objekte (O1, ..., O10), die als perspektivisch verdeckt gewertet sind, von der Bildverarbeitungseinheit nicht erkannt wurden,

wobei das Signal des Sensorsystems von einem zur Ansteuerung des virtuellen Automaten eingerichteten Steuersystem E2) oder von einer zur Ansteuerung des virtuellen Automaten eingerichteten Steuersoftware überwacht wird oder das Signal des Sensorsystems zur Ansteuerung eines Prüfstands verwendet wird, der eingerichtet ist, einem realen bildgebenden Sensor die Existenz von Objekten innerhalb seines Sensorsichtfelds vorzutäuschen;
wobei der erste Hüllkörper (B1) oder der zweite Hüllkörper (B2) vor der Durchführung der Projektion um den Skalierungsfaktor kleiner skaliert wird, oder

das erste Abbild (I1) oder das zweite Abbild (I2) vor der Durchführung der Kollisionserkennung kleiner skaliert wird.

2. Verfahren nach Anspruch 1 wobei die Auswahl von Punkten (P1-A, P2-A, P1-B, ..., P3-B) ausschließlich Punkte enthält, deren Abbilder Elemente der konvexen Hülle eines aus einer vollständigen Projektion des Hüllkörpers (B1, B2) resultierenden Abbilds des Hüllkörpers (B1, B2) sind.

3. Verfahren nach einem der Ansprüche 1 oder 2, wobei während der Durchführung der Projektion des ersten Hüllkörpers (B1) oder des zweiten Hüllkörpers (B2) eine Kollisionserkennung anhand der Abbilder (I1-A, I2-A, I1-B, ..., I3-B) der bereits auf die Projektionsebene (P) projizierten Punkte (P1-A, P2-A, P1-B, ..., P3-B) des ersten Hüllkörpers (B1) und des zweiten Hüllkörpers (B2) durchgeführt wird und die noch nicht abgeschlossenen Projektionen abgebrochen werden, wenn anhand der Abbilder (I1-A, I2-A, I1-B, ..., I3-B) der bereits projizierten Punkte (P1-A, P2-A, P1-B, ..., P3-B) eine Kollision erkannt wird oder eine Kollision ausgeschlossen wird.

4. Verfahren nach einem der Ansprüche 1 bis 3, wobei die euklidischen Abstände des ersten Hüllkörpers (B1) und des zweiten Hüllkörpers (B2) zum Sensor (S) ermittelt werden, insbesondere anhand der Ortskoordinaten des ersten virtuellen Objekts (O1), des zweiten virtuellen Objekts (O2) und des Sensors (S).

5. Zur Durchführung eines Verfahrens nach einem der Ansprüche 1 bis 4 eingerichtetes Computersystem (TB).

6. Computerprogrammprodukt zur Einrichtung eines Computersystems (TB) zur Durchführung eines Verfahrens nach einem der Ansprüche 1 bis 4.

**Claims**

1. A method for simulating a sensor system comprising an imaging sensor (S) and an image processing unit for detecting objects (01, ..., 010) in the sensor image output by the sensor (S),

    location coordinates being associated with the sensor (S) and location coordinates being associated with each virtual object (01, ..., 010) in a virtual test environment (VT) comprising a plurality of virtual objects (01, ..., 010) and in which the sensor (S) is suspended on a virtual automatic machine, particularly a virtual automated vehicle (VE) ;

a sensor field of vision (FV) being associated with the sensor (S) in the virtual test environment (VT) and a quantity of objects from the plurality of virtual objects (01, ..., 010) being determined as virtual objects detectable by the sensor system;

a simulation run being started during the course of which new location coordinates in the virtual test environment (VT) are cyclically assigned to the sensor (S) or to at least one virtual object (01, ..., 010),

and a check of whether at least one virtual object (01, ..., 010) has been captured by the sensor field of vision (FV) is performed cyclically;

**characterized in that** a tolerance value is defined for a perspective concealment of a virtual object (01, ..., 010) detectable by the sensor system and a scaling factor is calculated from the tolerance value;

for the case that a first virtual object (O1) and a second virtual object (O2) detectable by the sensor system are captured by the sensor field of vision (FV),

- a projection plane (P) suitable for a central projection of the first virtual object (O1) and of the second virtual object (O2) and having the location coordinates of the sensor (S) as the center of projection is established;
- a first image (11) is formed on the projection plane (P) **in that** a scaled or unsealed first bounding volume (B1) of the first virtual object (O1) is at least partially projected onto the projection plane (P) in a central projection having the location coordinates of the sensor (S) as the center of projection;
- a second image (12) is formed on the projection plane (P) **in that** a scaled or unsealed second bounding volume (B2) of the second virtual object (O2) is at least partially projected onto the projection plane (P) in a central projection having the location coordinates of the sensor (S) as the center of projection,

wherein a selection of points (P1-A, P2-A, P1-B, ..., P3-B) of the bounding volume (B1, B2) are projected for forming an image (I1, I2) of a bounding volume (B1, B2), and
the corresponding convex hulls of the images (I1, I2) are formed on the projection plane (P) from the point cloud formed by the images (I1-A, I1-B, I2-A, ..., I2-B) of the selected points;

- a check is performed by a collision detection using a Gilbert-Johnson-Keerthi algorithm as to whether an overlap of the first image (I1) and of the second image (I2) exists;
- for the case that

i. an overlap exists,
ii. the Euclidian distance between the sensor (S) and the first virtual object (O1) is less than the Euclidian distance between the sensor and the second virtual object (O2),
the second virtual object (O2) is evaluated as perspectively concealed;

- for the case that at least one of the conditions i. or ii. is not met, the second virtual object (O2) is evaluated as perspectively not concealed; and
- a signal of the sensor system is generated, from which the information can be obtained that all of the virtual objects (O1, ..., O10) captured by the sensor field of vision (FV) and detectable by the sensor system and not evaluated as perspectively concealed have been detected by the image processing unit and that all of the virtual objects (O1, ..., O10) captured by the sensor field of vision (FV) and detectable by the sensor system and evaluated as perspectively concealed have not been detected by the image processing unit,

wherein the signal of the sensor system is monitored by a control system (E2) configured for actuating the virtual automatic machine or by a control software configured for actuating the virtual automatic machine,
or the signal of the sensor system is used for actuating a test bench configured for simulating the presence of objects within the sensor field of vision of a real imaging sensor;
wherein the first bounding volume (B1) or the second bounding volume (B2) is scaled smaller by the scaling factor before performing the projection, or
the first image (I1) or the second image (I2) is scaled smaller before performing the collision detection.

2. The method according to claim 1, wherein the selection of points (P1-A, P2-A, P1-B, ..., P3-B) comprises exclusively points, the images of which are elements of the convex hull of an image of the bounding volume (B1, B2) resulting from a complete projection of the bounding volume (B1, B2).

3. The method according to any one of the claims 1 or 2, wherein a collision detection is performed during the performing of the project of the first bounding volume (B1) or of the second bounding volume (B2), using the images (I1-A, I2-A, I1-B, ..., I3-B) of the points (P1-A, P2-A, P1-B, ..., P3-B) of the first bounding volume (B1) and of the second bounding volume (B2) already projected onto the projection plane (P) and the projections not yet completed are interrupted when a collision is recognized or a collision is ruled out using the images (I1-A, I2-A, I1-B, ..., I3-B) of the points (P1-A, P2-A, P1-B, ..., P3-B) already projected.

4. The method according to any one of the claims 1 through 3, wherein the Euclidian distances from the first bounding volume (B1) and the second bounding volume (B2) to the sensor (S) are determined, particularly using the location coordinates of the first virtual object (O1), of the second virtual object (O2), and of the sensor (S).

5. A computer system (TB) configured for performing a method according to any one of the claims 1 through 4.

6. A computer program product for configuring a computer system (TB) for performing a method according to any one of the claims 1 through 4.

**Revendications**

1. Procédé pour la simulation d'un système de capteurs qui comprenant un capteur d'imagerie (S) et une unité de traitement d'images pour détecter des objets (O1, ..., O10) dans l'image de capteur sortie par le capteur (S),

   dans lequel, dans un environnement de test virtuel (VT) comprenant une pluralité d'objets virtuels (O1, ..., O10), dans lequel le capteur (S) est suspendu à un automate virtuel, en particulier à un véhicule automatisé virtuel (VE), des coordonnées de localisation sont attribuées au capteur (S) et des coordonnées de localisation sont attribuées à chaque objet virtuel (O1, ..., O10) ;
   un champ de vision (FV) de capteur est attribué au capteur (S) dans l'environnement de test virtuel (VT) et un nombre d'objets parmi la pluralité d'objets virtuels (O1, ..., O10) est déterminé comme étant des objets virtuels identifiables par le système de capteur ;
   une marche de simulation est lancée, au cours de laquelle de nouvelles coordonnées de localisation sont attribuées de manière cyclique au capteur (S) ou à au moins un objet virtuel (01, ..., 010) dans l'environnement de test virtuel (VT), et il est vérifié de manière cyclique si au moins un objet virtuel (O1, ..., O10) est détecté par le champ de vision (FV) du capteur ;

**caractérisé en ce que** une valeur de tolérance est fixée pour un masquage en perspective d'un objet virtuel (O1, ..., O10) identifiable pour le système de capteurs et un facteur de mise à l'échelle est calculé à partir de la valeur de tolérance ;
dans le cas où un premier objet virtuel (O1) et un deuxième objet virtuel (O2) identifiable par le système de capteurs sont détectés par le champ de vision (FV) du capteur,

   - un plan de projection (P) approprié pour une projection centrale du premier objet virtuel (O1) et du deuxième objet virtuel (O2) avec les coordonnées de localisation du capteur (S) comme point de vue est tendu ;
   - une première image (I1) est formée sur le plan de projection (P) par projection, au moins partielle, sur le plan de projection (P), d'un premier volume englobant (B1) mis à l'échelle ou non, du premier objet virtuel (O1) dans une projection centrale avec les coordonnées de localisation du capteur (S) comme point de vue ;
   - une deuxième image (I2) est formée sur le plan de projection (P) par projection, au moins partielle, sur le plan de projection (P), d'un deuxième volume englobant (B2) mis à l'échelle ou non, du deuxième objet virtuel (O2) dans une projection centrale avec les coordonnées de localisation du capteur (S) comme point de vue,

dans lequel, pour former une image (I1, I2) d'un volume englobant (B1, B2), une sélection de points (P1-A, P2-A, P1-B, ..., P3-B) du volume englobant (B1, B2) est projetée, et à partir du nuage de points formé par les images (I1-A, I1-B, I2-A, ..., I2-B) des points sélectionnés, on forme sur le plan de projection (P) les enveloppes convexes respectives des images (I1, I2) ;

   - on vérifie par une détection de collisions utilisant un algorithme de Gilbert-Johnson-Keerthi s'il existe un recoupement de la première image (I1) et de la deuxième image (I2) ;
   - Dans le cas où

      i. il existe un recoupement,
      ii. la distance euclidienne entre le capteur (S) et le premier objet virtuel (O1) est inférieure à la distance euclidienne entre le capteur et le deuxième objet virtuel (O2), le deuxième objet virtuel (O2) est jugé masqué en perspective ;

- dans le cas où au moins l'une des conditions i. ou ii. n'est pas remplie, le deuxième objet virtuel (O2) est jugé non masqué en perspective ; et
- un signal du système de capteurs est généré, duquel peut être tirée l'information que tous les objets virtuels (O1, ..., O10) détectés par le champ de vision (FV) du capteur et identifiables par le système de capteurs, qui sont jugés non masqués en perspective, ont été identifiés par l'unité de traitement d'images et tous les objets virtuels (O1, ..., O10) détectés par le champ de vision (FV) du capteur et identifiables par le système de capteurs, qui sont jugés masqués en perspective, n'ont pas été identifiés par l'unité de traitement d'images,

le signal du système de capteurs étant surveillé par un système de commande (E2) configuré pour commander l'automate virtuel ou par un logiciel de commande configuré pour commander l'automate virtuel,
ou le signal du système de capteurs est utilisé pour commander un banc d'essai qui est conçu pour simuler à un capteur d'imagerie réel l'existence d'objets à l'intérieur de son champ de vision de capteur ;
le premier volume englobant (B1) ou le deuxième volume englobant (B2) étant mis à une échelle plus petite par le facteur de mise à l'échelle avant l'exécution de la projection, ou la première image (I1) ou la deuxième image (I2) étant mise à une échelle plus petite avant l'exécution de la détection de collisions.

2. Procédé selon la revendication 1, dans lequel la sélection de points (P1-A, P2-A, P1-B, ..., P3-B) contient exclusivement des points dont les images sont des éléments de l'enveloppe convexe d'une image du volume englobant (B1, B2) résultant d'une projection complète du volume englobant (B1, B2).

3. Procédé selon l'une quelconque des revendications 1 ou 2, dans lequel, pendant l'exécution de la projection du premier volume englobant (B1) ou du deuxième volume englobant (B2), il est effectué une détection de collisions à l'aide des images (I1-A, I2-A, I1-B, ..., I3-B) des points (P1-A, P2-A, P1-B, ..., P3-B) du premier volume englobant (B1) et du deuxième volume englobant (B2) déjà projetés sur le plan de projection (P),
et les projections non encore achevées sont interrompues si une collision est détectée ou si une collision est exclue sur la base des images (I1-A, I2-A, I1-B, ..., I3-B) des points déjà projetés (P1-A, P2-A, P1-B, ..., P3-B).

4. Procédé selon l'une quelconque des revendications 1 à 3, dans lequel les distances euclidiennes du premier volume englobant (B1) et du deuxième volume englobant (B2) par rapport au capteur (S) sont déterminées, en particulier à l'aide des coordonnées de localisation du premier objet virtuel (O1), du deuxième objet virtuel (O2) et du capteur (S).

5. Système d'ordinateur (TB) configuré pour la mise en œuvre d'un procédé selon l'une quelconque des revendications 1 à 4.

6. Produit de programme informatique en vue de la configuration d'un système d'ordinateur (TB) pour la mise en œuvre d'un procédé selon l'une quelconque des revendications 1 à 4.

Fig. 1

EP 3 570 063 B1

**Fig. 2**

Fig. 3

EP 3 570 063 B1

SD1 B2

P3

SD2

P1

SP

P2

V

S

**Fig. 4**

EP 3 570 063 B1

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0620409 B1
- US 20170363719 A1
- US 9575161 B1


**In der Beschreibung aufgeführte Nicht-Patentliteratur**

- Visibility and Hidden Surface Removal. **TORSTEN MÖLLER.** Teil der Vorlesung ''CMPT 361: Introduction to Computer Graphics. Simon Fraser University
- Fast Collision Detection Based on Projection Parallel Algorithm. **XUE-LI SHEN ; TAO LI.** International Conference on Future Computer und Communication. IEEE, 2010
- **PATRICK LINDEMANN.** The Gilbert-Johnson-Keerthi Distance Algorithm. *geschrieben für das Media Informatics Proseminar on ''Algorithms on Media Informatics'',* 2009